# EUROPÄISCHE PATENTANMELDUNG

(11) **EP 4 573 990 A1**
(43) Veröffentlichungstag der Anmeldung: **25.06.2025**
(21) Anmeldenummer: 24214434.3
(22) Anmeldetag: 21.11.2024
(51) Int. Cl.: A47J 31/46, A47J 31/44

(54) **ANSAUGSTUTZEN ZUR VERWENDUNG AN EINER GETRÄNKEZUBEREITUNGSVORRICHTUNG**

(30) Priorität: 22.12.2023 DE 102023136614
(71) Anmelder: Eugster/Frismag AG, 8580 Amriswil (CH)
(72) Erfinder: Wahl, Daniel, 8574 Oberhofen-Lengwil (CH)
(74) Vertreter: Patent- und Rechtsanwälte Behrmann Wagner PartG mbB

(57) **Zusammenfassung**

Ansaugstutzen zur Verwendung an einer Saugvorrichtung (2) in einer Getränkezubereitungsvorrichtung, insbesondere eine Kaffee- oder Espressomaschine mit einem Milchmodul, wobei der Ansaugstutzen (1) ein Kopfelement (3) umfasst, welches wenigstens einen, bevorzugt an einem von der Saugvorrichtung (2) abgewandten Ende ausgebildeten, Befestigungsabschnitt (4) zur Befestigung des Ansaugstutzens (1) an der Saugvorrichtung (2) umfasst und eine Eintrittsöffnung (5) aufweist, durch welche Luft in den Ansaugstutzen (1) entlang einer axialen Richtung (A) eintreten, bevorzugt eingesaugt werden, kann, und wobei der Ansaugstutzen (1) ein mit dem Kopfelement (3) fluidleitend verbundenes Sperrelement (6) umfasst, welches derart ausgebildet ist, dass ein Eintreten von Flüssigkeit, bevorzugt von Spritzern einer aufzuschäumenden und/oder zu erwärmenden Flüssigkeit, besonders bevorzugt von Milchspritzern, in den Ansaugstutzen (1) entgegen der axial verlaufenden Richtung (A) verhindert wird, und wobei am Sperrelement (6) eine Ausführöffnung (7) ausgebildet ist, durch welche Luft aus dem Ansaugstutzen (1) austreten kann, wobei zwischen der Eintrittsöffnung (5) und der Ausführöffnung (7) ein, bevorzugt entlang der axialen Richtung (A) verlaufender, Fluidkanal (8) zur Führung der Luft durch den Ansaugstutzen (1) angeordnet ist, wobei am Sperrelement (6) ein der Ausführöffnung (7) nachgeordneter Führungsabschnitt (9) ausgebildet ist, durch welchen die Luft nach dem Austreten aus der Ausführöffnung (7) in einem Rohrabschnitt (14) der Saugvorrichtung (2) geführt wird.

## Beschreibung

Die vorliegende Erfindung betrifft einen Ansaugstutzen, zur Verwendung an einer Saugvorrichtung in einer Getränkezubereitungsvorrichtung nach dem vorliegenden Anspruch 1. Weiterhin betrifft die Erfindung eine Getränkezubereitungsvorrichtung welche einen erfindungsgemäßen Ansaugstutzen umfasst nach Anspruch 14.

Bei Kaffee- und/oder Espressomaschinen mit einem Milchmodul - welches, anders als eine reine Dampflanze zum Eintauchen in ein Milchgefäß automatisch Milch ansaugt, erwärmt, und/oder aufschäumt - besteht in der Regel die Möglichkeit über einen Ansaugstutzen Luft anzusaugen und mit der Milch zu vermischen, um einen Milchschaum herzustellen. Hierzu wird die Luft über einen Ansaugstutzen angesaugt und in die Milch geleitet, wobei beim Einleiten der Luft in die Milch Spritzer entstehen können die sich im Ansaugstutzen an der Luftblende absetzen und so zum Verstopfen der Blende und/oder Hygieneproblemen führen können.

Um zu verhindern, dass die Milchspritzer in den Ansaugstutzen gelangen, umfassen die Ansaugstutzen im Stand der Technik daher in der Regel ein Ventil, zum Beispiel ein Entenschnabelventil, um den Fluidkanal der Luft von der Seite des Milchmoduls für Milchspritzer unzugänglich zu machen. Hierbei ergibt sich allerdings das Problem, dass ein Entenschnabelventil eine sehr schmale Austrittsöffnung aufweist, welche nach wie vor direkt von Milchspritzern betroffen ist und schnell verstopft werden kann, wodurch das Einsaugen und Einleiten von Luft durch den Ansaugstutzen behindert oder sogar völlig unmöglich werden kann. Entsprechende Ansaugstutzen aus dem Stand der Technik erfordern daher eine häufige Reinigung und Wartung, um ihre Funktionalität zu behalten.

Aus der DE 10 2018 211 677 A1 ist eine Saugvorrichtung für eine Getränkezubereitungsvorrichtung bekannt, durch welche Luft in ein Milchmodul eingeleitet werden kann, wobei der Luftfluss durch ein mikroporöses Material eingestellt wird. Die US 2022/0257046 A1 zeigt eine Getränkezubereitungsvorrichtung, welche eine Saugvorrichtung für ein Milchmodul mit einem Drehknopf umfasst, wobei über den Drehknopf die Luftzufuhr erhöht und verringert werden kann.

Vor diesem Hintergrund liegt die Aufgabe der Erfindung darin, die Nachteile im Stand der Technik zu überwinden und insbesondere einen Ansaugstutzen vorzuschlagen, welcher resistent gegen ein Verstopfen ist und somit den Wartungsaufwand verringert.

Diese Aufgabe wird mit einem Ansaugstutzen mit den Merkmalen des Anspruchs 1 gelöst. Weiterhin wird die Aufgabe durch eine Getränkezubereitungsvorrichtung mit den Merkmalen des Anspruchs 14 gelöst.

Vorteilhafte Ausführungsformen des erfindungsgemäßen Ansaugstutzens und der Getränkezubereitungsvorrichtung umfassend einen erfindungsgemäßen Ansaugstutzen sind Gegenstand der nachfolgenden Beschreibung und Figurenbeschreibung sowie der Unteransprüche.

Die vorrichtungsmäßig offenbarten Merkmale sollen auch als entsprechend verfahrensmäßig offenbart und beanspruchbar gelten, und umgekehrt.

Der Ansaugstutzen sieht, wie bereits oben erwähnt, eine Verwendung an einer Saugvorrichtung in einer Getränkezubereitungsvorrichtung, insbesondere einer Kaffee- oder Espressomaschine mit einem Milchmodul vor.

Dabei umfasst der Ansaugstutzen ein Kopfelement, welches wenigstens einen, bevorzugt an einem von der Saugvorrichtung abgewandten Ende ausgebildeten, Befestigungsabschnitt zur Befestigung des Ansaugstutzens an der Saugvorrichtung umfasst und eine Eintrittsöffnung aufweist, durch welche Luft in den Ansaugstutzen entlang einer axialen Richtung (A) eintreten, bevorzugt eingesaugt werden, kann.

Ferner ist vorgesehen, dass der Ansaugstutzen ein mit dem Kopfelement fluidleitend verbundenes Sperrelement umfasst, welches derart ausgebildet ist, dass ein Eintreten von Flüssigkeit, bevorzugt von Spritzern einer aufzuschäumenden und/oder zu erwärmenden Flüssigkeit, besonders bevorzugt von Milchspritzern, in den Ansaugstutzen entgegen der axial verlaufenden Richtung (A) verhindert wird, und wobei am Sperrelement eine Ausführöffnung ausgebildet ist, durch welche Luft aus dem Ansaugstutzen austreten kann.

Weiter ist zwischen der Eintrittsöffnung und der Ausführöffnung ein, bevorzugt entlang der axialen Richtung (A) verlaufender, Fluidkanal zur Führung der Luft durch den Ansaugstutzen angeordnet.

Erfindungsgemäß ist dabei vorgesehen, dass am Sperrelement ein der Ausführöffnung nachgeordneter Führungsabschnitt ausgebildet ist, durch welchen die Luft nach dem Austreten aus der Ausführöffnung in einem Rohrabschnitt der Saugvorrichtung geführt wird.

Der Ansaugstutzen hat dabei vorteilhafterweise eine insgesamt zylindrische Erscheinungsform, wobei unter zylindrisch in diesem Zusammenhang kein Zylinder mit einem gleichmäßigen Außenumfang verstanden werden soll, sondern am Außenumfang des Ansaugstutzens eine Vielzahl von Einformungen und Ausformungen vorgesehen sein kann.

Als axiale Richtung soll die generelle, bezogen auf einen zylindrischen Ansaugstutzen entlang oder parallel zur Mittelachse verlaufende, Richtung verstanden werden, entlang welcher Luft in den Ansaugstutzen aktiv aufgenommen wird, insbesondere eingesaugt wird, und durch den Ansaugstutzen in Richtung der Kontaktstelle mit der insbesondere aufzuschäumenden und/oder aufzuwärmenden Flüssigkeit, bevorzugt Milch, geleitet wird. Dabei ist nicht ausgeschlossen, dass die Luft sich streckenweise abseits dieser axialen Richtung bewegt.

Der Ansaugstutzen kann aus einer Vielzahl von Materialen oder Materialmischungen gefertigt sein, bevorzugt aus einem Kunststoff, wobei das Kopfelement und das Sperrelement aus dem gleichen Material oder aus unterschiedlichen Materialen bestehen können. Da die Materialien potentiell mit Lebensmitteln in Kontakt kommen ist die diesbezügliche Verträglichkeit und Lebensmittelsicherheit vorteilhaft. Ebenfalls kann vorteilhaft vorgesehen sein, dass die Materialien spülmaschinenfest sind.

Als Führungsabschnitt soll ein Abschnitt verstanden werden, welcher bevorzugt monolithisch am Sperrelement ausgebildet ist und durch den der Fluidfluss der Luft räumlich eingeschränkt, gelenkt und kontrolliert wird. Besonders bevorzugt wird die Luft direkt nach dem Austritt aus der Ausführöffnung durch den Führungsabschnitt gelenkt, bevorzugt von der axialen Richtung umgelenkt, wodurch insbesondere ein Durchfluss entlang der axialen Richtung wenigstens stellenweise unterbrochen ist. Besonders vorteilhaft wird die Luft in zwei, insbesondere entgegengesetzte, senkrecht zur axialen Richtung verlaufende Richtungen umgelenkt, wodurch ein aufgeteilter Fluidfluss entsteht. Somit ist ein Eintreten von Flüssigkeiten oder Flüssigkeitsspritzern entgegen der axialen Richtung nicht möglich, da die Spritzer eine gradlinige/ballistische Flugbahn aufweisen und die durch den Führungsabschnitt vorgegebenen Richtungsänderungen nicht nachvollziehen können.

Die vorliegende Erfindung hat erkannt, dass durch einen der Ausführöffnung nachgeordneten Führungsabschnitt verschiedene Probleme gelöst werden, wodurch insgesamt besonders vorteilhaft ein Verstopfen der Ausführöffnung verhindert wird.

Denn durch den Führungsabschnitt kann verhindert werden, dass Flüssigkeitsspritzer, insbesondere Milchspritzer direkt an die Ausführöffnung gelangen und dort zu einem Verkleben führen. Da also kein Kontakt der Milchspritzer mit der Ausführöffnung befürchtet werden muss, kann besonders vorteilhaft auch eine größere Ausführöffnung realisiert werden, wodurch die Luft schneller und in größerem Volumen durch den Ansaugstutzen geleitet werden kann. Dabei wird durch den Führungsabschnitt auch gewährleistet, dass die Luft kontrolliert aus dem Ansaugstutzen austritt, wodurch ein besonders reproduzierbares Aufschäumergebnis entsteht. Ebenso ist ein Durchspülen des Führungsabschnitts während einer manuellen Reinigung gegenüber dem Spülen eines Ventils deutlich erleichtert.

Gemäß einer ersten vorteilhaften Ausführungsform kann vorgesehen sein, dass der Führungsabschnitt wenigstens teilweise entlang der axialen Richtung (A) des Ansaugstutzens verlaufend ausgebildet ist.

Dies ist besonders vorteilhaft, um insgesamt ein schnelles Durchlaufen des Ansaugstutzens mit der Luft zu erreichen und um die Luft letztendlich entlang der axialen Richtung aus dem Ansaugstutzen heraus in die weiteren Teile des Milchmoduls zu leiten, insbesondere zum Aufschäumen von Milch.

Gemäß einer weiteren vorteilhaften Ausführungsform kann vorgesehen sein, dass der Führungsabschnitt wenigstens teilweise senkrecht zur axialen Richtung (A) des Ansaugstutzens verlaufend angeordnet ist.

Hierdurch wird besonders vorteilhaft erreicht, dass die Luft von der axialen Richtung stellenweise umgelenkt wird und somit ein Eindringen von Flüssigkeit oder Flüssigkeitsspritzern entgegen der axialen Richtung nicht möglich ist, da die Spritzer den umgelenkten Fluidpfad nicht nachvollziehen können. Dabei sind vorteilhaft auch Ausführungen möglich bei denen die Ausrichtung des Führungsabschnitts stellenweise nur annähernd senkrecht zur axialen Richtung verläuft oder abgewinkelt mit einem Neigungswinkel von unter 90°. Weiterhin ist diese Ausführung besonders bevorzugt, um insbesondere unmittelbar, nach dem Austreten der Luft aus der Ausführöffnung die Luft in zwei, bevorzugt gegenüberliegende, Richtungen umzulenken und so den Fluidstrom zu teilen.

Gemäß einer weiteren vorteilhaften Ausführungsform kann vorgesehen sein, dass der Führungsabschnitt wenigstens teilweise entlang des Umfangs des Ansaugstutzens verlaufend angeordnet ist.

Durch diese Ausführung kann die Luft besonders vorteilhaft geführt werden, insbesondere durch Abschnitte, an welchen die Führung von der axialen Richtung umgelenkt wurde. Die Führung entlang des Umfangs hat sich hierbei als besonders gut geeignet für einen zylindrischen Ansaugstutzen herausgestellt.

Gemäß einer weiteren vorteilhaften Ausführungsform kann vorgesehen sein, dass der Führungsabschnitt wenigstens eine, bevorzugt eine Vielzahl von, Verzweigungen/en aufweist.

Hierdurch kann besonders vorteilhaft gewährleistet werden, dass auch bei stark spritzendem Aufschäumen von Milch keine Milchspritzer bis zur Ausführöffnung des Ansaugstutzens gelangen können. Weiterhin kann durch die verzweigte Führung die Luft besonders vorteilhaft in ihrer Flussgeschwindigkeit und ihrem Durchflussvolumen kontrolliert werden.

Gemäß einer weiteren vorteilhaften Ausführungsform kann vorgesehen sein, dass der Führungsabschnitt wenigstens teilweise am Außenumfang des Sperrelements ausgebildet ist, insbesondere als randseitig verlaufende Kanäle.

Bevorzugt wird die äußere Begrenzung der Fluidführung der Luft also durch den Innendurchmesser der Saugvorrichtung gewährleistet, in welcher der Ansaugstutzen angeordnet wird.

Durch diese Ausführung wird der Führungsabschnitt besonders leicht zu reinigen. Besonders bevorzugt ist der Außenumfang des Führungsabschnitts auf den Innenumfang der Saugvorrichtung angepasst, so dass der Führungsabschnitt wenigstens stellenweise der Saugvorrichtung so nahekommt, dass ein Durchtreten von Luft entlang der Seiten des Führungsabschnitts nur an den dafür vorgesehenen Abschnitten möglich ist und kein Durchtreten von Flüssigkeitsspritzern entgegen der axialen Richtung möglich ist.

Die zuvor beschriebenen Ausführungen wirken besonders vorteilhaft zusammen, um den Führungsabschnitt im weitesten Sinne als Labyrinth auszubilden. Die Ausbildung des Labyrinths kann dabei insbesondere durch eine Anordnung von Ebenen erreicht werden, wobei einer ersten, insbesondere der Ausführöffnung unmittelbar nachgeordneten, Ebene wenigstens eine zweite, besonders bevorzugt eine dritte, ganz besonders bevorzugt eine vierte Ebene, in axialer Richtung nachgeordnet sind. Dabei sind die Flächen der Ebenen parallel zueinander ausgerichtet. Die Ebenen sind hierbei als, bevorzugt ringförmige, Erweiterungen um einen zentralen, insbesondere zylindrischen, Achsstamm angeordnet. Bevorzugt weist die erste Ebene dabei seitliche Randerweiterungen auf, durch welche der Führungsabschnitt, insbesondere monolithisch, mit dem vorgeordneten Bereich des Sperrelements verbunden ist. Die Ebenen weisen dabei vorteilhaft einen bestimmten Abstand voneinander auf, wodurch zwischen den Ebenen, entlang des Umfangs randseitige Fluidkanäle ausgebildet werden.

Die Ebenen weisen dabei vorteilhaft kanalartige Durchführungen auf, zum Beispiel als Einformungen am äußeren Rand der Ebene und/oder durch unterschiedlich große Außenumfänge und/oder durch seitliche Abschneidungen ihres, bevorzugt runden, Außenumfangs. Hierdurch entsteht jeweils ein seitlicher Spalt und/oder Kanal an den Rändern der Ebenen, durch welchen die Luft entlang der axialen Richtung zur jeweils nachgeordneten Ebene fließen kann. Vorteilhaft sind die Durchführungen einer Ebene dabei jeweils in doppelter Ausführung spiegelsymmetrisch auf gegenüberliegenden Seiten des Sperrelements ausgebildet. Dabei müssen die Durchführungen der Ebenen nicht alle die gleiche Symmetrieebene aufweisen, sondern können zum Beispiel auch in Bezug auf eine erste Symmetrieebene um 1 bis 90° entlang des Umfangs rotierte Symmetrieebenen aufweisen.

Durch diese Ausführung als Labyrinth trifft die Luft nach dem Austreten aus der Ausführöffnung unmittelbar auf die erste Ebene, wodurch sie, bevorzugt in zwei gegenüberliegende Richtungen, senkrecht zur axialen Richtung umgelenkt wird. Durch die Umlenkung wird die Luft zu einer der vorhergehend beschriebenen Durchführungen geleitet, durch welche die Luft entlang der axialen Richtung zu der nachgeordneten Ebene durchtritt. Hier trifft die Luft wieder auf eine Ebene auf und wird, bevorzugt in zwei gegenüberliegende Richtungen, senkrecht zur axialen Richtung umgelenkt, wobei die Luft nach dem Umlenken entlang des Umfangs des Sperrelements geführt wird, bis sie die Durchführung zur nächsten, nachgeordneten Ebene erreicht. Durch die Verzweigungen des Führungsabschnitts wird der Fluidstrom dabei mehrfach aufgespalten und wieder zusammengeführt.

Gemäß einer weiteren vorteilhaften Ausführungsform kann vorgesehen sein, dass das Kopfelement und das Sperrelement, bevorzugt vollständig, voneinander trennbar ausgebildet sind.

Diese Ausführung ist besonders vorteilhaft, um eine einfache und vollständige Reinigung des Ansaugstutzens zu ermöglichen. Ebenso kann durch eine solche Ausführung ein Austausch einzelner Komponenten ermöglicht werden.

Gemäß einer weiteren vorteilhaften Ausführungsform kann vorgesehen sein, dass das Sperrelement an seinem dem Kopfelement zugewandten Ende und das Kopfelement an seinem dem Sperrelement zugewandten Ende jeweils einen Verbindungsabschnitt umfassen, wobei der Außenumfang des Verbindungsabschnitts des Sperrelements und der Innenumfang des Verbindungsabschnitts des Kopfelements derart ausgebildet sind, dass das Sperrelement, bevorzugt entgegen der axialen Richtung A, mit dem Kopfelement verbunden werden kann, insbesondere in das Kopfelement eingesteckt und/oder eingeschoben werden kann.

Hierdurch wird besonders vorteilhaft durch die Abstimmung des Außenumfangs des Sperrelements und dem Innendurchmesser des Kopfelements ein intuitiver und stabiler Verbindungsmechanismus hergestellt, welcher gleichzeitig auch eine Dichtung der Verbindung zwischen Sperrelement und Kopfelement im Bereich der Verbindungsstelle erreicht.

Gemäß einer weiteren vorteilhaften Ausführungsform kann vorgesehen sein, dass am Ansaugstutzen, bevorzugt im Bereich der Verbindungsstelle des Kopfelements mit dem Sperrelement, ein Bündelelement, insbesondere eine Blende, angeordnet ist, welche einen geringeren Innendurchmesser als der Innendurchmesser des Kopfelements und/oder des Sperrelements aufweist.

Hierdurch kann besonders vorteilhaft die eingesogene Luft gebündelt werden und auf eine gewünschte Durchflussgeschwindigkeit eingestellt werden. Bevorzugt ist die Blende austauschbar ausgebildet und kann verschiedene Innendurchmesser aufweisen, welche an das zu erreichende Ergebnis angepasst sein können.

Gemäß einer weiteren vorteilhaften Ausführungsform kann vorgesehen sein, dass ein erstes Dichtungselement, insbesondere ein in Umfangsrichtung vollständig geschlossener Dichtungsring, im Bereich der Verbindungsstelle des Kopfelements mit dem Sperrelement angeordnet ist.

Hierdurch kann besonders vorteilhaft gewährleistet werden, dass die geführte Luft an der Verbindungsstelle zwischen Kopfelement und Sperrelement nur dem gewünschten Fluidpfad folgt. Bevorzugt ist das Dichtungselement als trennbares und austauschbares Element ausgebildet. Ausführungen, in denen das Dichtungselement dem Kopfelement oder Sperrelement als Dichtungslasche zugeordnet ist, sind allerdings ebenso denkbar.

Gemäß einer weiteren vorteilhaften Ausführungsform kann vorgesehen sein, dass wenigstens ein zweites, bevorzugt in Umfangsrichtung vollständig geschlossenes, Dichtungselement am Außenumfang des Kopfelements angeordnet ist.

Durch diese Ausführung wird die Dichtigkeit des Ansaugstutzens noch weiter verbessert und die Anordnung des Ansaugstutzens in der Saugvorrichtung wird besonders stabil. Das Dichtungselement kann vorteilhaft auch als Dichtungslasche ausgebildet sein, wobei besonders vorteilhaft das Kopfelement eine Ausnehmung aufweist, in welcher die Dichtungslasche versenkt angeordnet werden kann.

Gemäß einer weiteren vorteilhaften Ausführungsform kann vorgesehen sein, dass der Befestigungsabschnitt des Kopfelements kuppelartig, insbesondere pilzförmig, ausgebildet ist.

Diese Ausführung kann besonders gut mit einer zylindrischen Saugvorrichtung zusammenwirken, wobei eine dichte Anlage, insbesondere Lagerung, des Befestigungselements an der Saugvorrichtung erreicht wird. Alternativ sind auch andere Ausführungen des Befestigungsabschnitts möglich, zum Beispiel als weitestgehend flache Oberfläche mit einer Grifflasche oder einem Griffring, wobei die kuppelartige Ausführung besonders bevorzugt wird.

Gemäß einer weiteren vorteilhaften Ausführungsform kann vorgesehen sein, dass am Außenumfang des Sperrelements wenigstens zwei Ausformungen, insbesondere Zapfen, ausgebildet sind und am Innenumfang des Kopfelements wenigstens zwei zu den Ausformungen komplementär geformte Aussparungen ausgebildet sind.

Durch diese Ausführung kann die Verbindung des Sperrelements mit dem Kopfelement besonders in axialer Richtung noch weiter unterstützt werden, wobei die Ausformungen bevorzugt in den Ausnehmungen, insbesondere reversibel, einrasten, wodurch die Verbindung auch bei hohem Druck von durchfließender Luft stabil bleibt.

Weiterhin wird die oben genannte Aufgabe durch eine Getränkezubereitungsvorrichtung mit einer Saugvorrichtung gelöst, bevorzugt eine Kaffee- und/oder Espressomaschine mit einem Schaummodul, umfassend einen erfindungsgemäßen Ansaugstutzen.

Zur Vermeidung unnötiger Wiederholung wird im Hinblick auf die vorteilhaften Wirkungen, sowie die vorteilhaften Ausführungen der Getränkezubereitungsvorrichtung auf den oben beschriebenen Ansaugstutzen verwiesen.

Zusammengefasst ermöglicht die Erfindung eine Getränkezubereitungsvorrichtung mit einem Saugmodul vorzuschlagen mit einem erfindungsgemäßen Ansaugstutzen, welcher resistent gegen ein Verstopfen ist und somit den Wartungsaufwand verringert.

Nachfolgend wird die vorliegende Erfindung anhand von lediglich schematischen, beispielhafte Ausführungsformen der Erfindung zeigenden Zeichnungen näher erläutert.
Fig. 1 Eine Schnittdarstellung einer ersten Ausführung eines erfindungsgemäßen Ansaugstutzens in einer Saugvorrichtung einer Getränkezubereitungsvorrichtung
Fig. 2 Eine perspektivische Ansicht einer ersten Ausführung eines erfindungsgemäßen Sperrelements auf der Seite liegend
Fig. 3 Eine perspektivische Seitenansicht einer ersten Ausführung eines erfindungsgemäßen Sperrelements
Fig. 4 Eine perspektivische Ansicht einer ersten Ausführung eines erfindungsgemäßen Ansaugstutzens

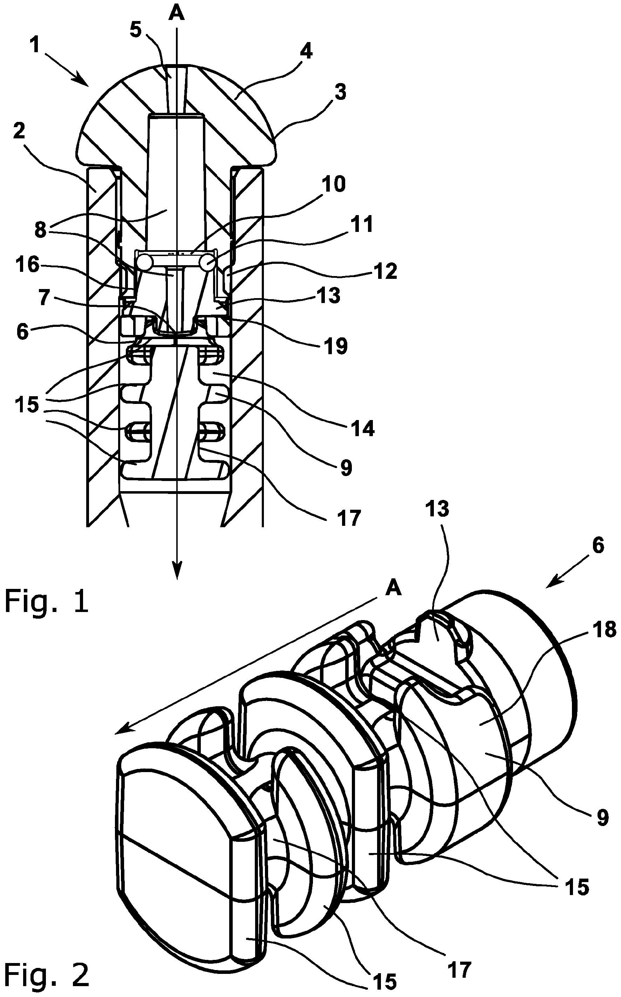

Die Fig. 1 zeigt einen erfindungsgemäßen Ansaugstutzen 1 angeordnet in einer Saugvorrichtung 2 einer Getränkezubereitungsvorrichtung. Der Ansaugstutzen 1 ist dabei entlang der axialen Richtung A in die Saugvorrichtung 2 eingesteckt, wobei der Befestigungsabschnitt 4 des Kopfelements 3 an der Saugvorrichtung 2 zur Befestigung angeordnet ist. Der Befestigungsabschnitt 4 ist bevorzugt kuppelartig ausgebildet, insbesondere pilzförmig, wobei auch andere Ausführungen, zum Beispiel mit einer Grifflasche oder einem Griffring denkbar sind.

Am Kopfelement 3 des Ansaugstutzen 1 ist weiterhin eine Eintrittsöffnung 5 ausgebildet, durch welche Luft, entlang der axialen Richtung A in den Ansaugstutzen 1 aufgenommen, insbesondere eingesaugt, werden kann. Dabei ist im Kopfelement 3 und in dem in axialer Richtung an das Kopfelement anschließenden Sperrelement 6 ein Fluidkanal 8 ausgebildet, durch welchen die Luft, insbesondere in axialer Richtung A, durch den Ansaugstutzen geleitet werden kann. Das Kopfelement 3 und das Sperrelement 6 sind bevorzugt trennbar voneinander ausgebildet, wobei das Sperrelement 6 an einem Verbindungsabschnitt entgegen der axialen Richtung A in einen Verbindungsabschnitt des Kopfelements zur Ausbildung einer Verbindungsstelle 16 einsteckbar und/oder lösbar ist. Dabei sind vorteilhaft der Innendurchmesser des Kopfelements 3 und der Außendurchmesser des Sperrelements 6 derart aufeinander abgestimmt, dass die Verbindung stabil und dicht ist. Das Sperrelement 6 weist dabei bevorzugt Ausformungen 13 auf, welche in am Kopfelement 3 komplementär geformte Aussparungen 19 angeordnet werden können. An der Verbindungsstelle 16 des Sperrelements 6 und des Kopfelements 3 ist eine Blende 10 angeordnet, welche die durchströmende Luft bündelt und einen der gewünschten Strömungsgeschwindigkeit angepassten Innendurchmesser aufweisen kann. Weiterhin ist an der Verbindungsstelle 16 zwischen Sperrelement 6 und Kopfelement 3 ein erstes Dichtungselement 11 angeordnet, welches insbesondere als in Umfangsrichtung vollständig geschlossener und trennbarer Dichtungsring ausgebildet ist, wobei auch eine Ausführung als untrennbar angeordnete Dichtungslasche denkbar ist. Dabei kann auch ein zweites Dichtungselement 12 am Außenumfang des Kopfelements 3 angeordnet sein, welches die Dichtigkeit des Ansaugstutzens weiter verbessert und bevorzugt als in Umfangsrichtung vollständig geschlossener Dichtungsring oder Dichtungslasche ausgebildet ist, welche vorteilhaft in einer Ausnehmung des Kopfelements 3 versenkt angeordnet ist.

Weiterhin ist am oder im Sperrelement 6 eine Ausführöffnung 7 ausgebildet, durch welche Luft aus dem Ansaugstutzen 1 austreten kann, wobei der Ausführöffnung 7 ein Führungsabschnitt 9 nachgeordnet ist. Der Führungsabschnitt 9 ist dabei als Labyrinth ausgebildet, durch eine Anordnung von vier einander in axialer Richtung A nachfolgenden Ebenen 15. Dabei sind die Flächen der Ebenen 15 parallel zueinander ausgerichtet und die Ebenen 15 sind als ringförmige Erweiterungen um einen zentralen, zylindrischen Achsstamm 17 angeordnet. Die erste Ebene 15 weist dabei seitliche Randerweiterungen 18 auf, durch welche der Führungsabschnitt 9 monolithisch mit dem vorgeordneten Bereich des Sperrelements 6 verbunden ist. Die Ebenen 15 weisen dabei einen Abstand voneinander auf, wodurch zwischen den Ebenen 15, entlang des Umfangs randseitige Kanäle ausgebildet werden. Die Ebenen 15 weisen dabei außerdem kanalartige Durchführungen auf, als Einformungen am äußeren Rand der Ebenen 15 und durch seitliche Abschneidungen ihres ansonsten runden Außenumfangs. Hierdurch entsteht jeweils ein seitlicher Spalt und/oder Kanal an den Rändern der Ebenen 15, durch welchen die Luft entlang der axialen Richtung A zur jeweils nachgeordneten Ebene 15 fließen kann. Dabei sind die Durchführungen einer Ebene 15 jeweils in doppelter Ausführung spiegelsymmetrisch auf gegenüberliegenden Seiten des Sperrelements 6 ausgebildet, wobei nicht alle Ebenen 15 dieselbe Symmetrieebene aufweisen.

Die Fig. 2 zeigt ein erfindungsgemäßes Sperrelement 6 auf der Seite liegend. Am Sperrelement sind dabei Ausformungen 13 ausgebildet, welche vorteilhaft in am hier nicht gezeigten Kopfelement 3 komplementär geformte Aussparungen 19 angeordnet werden können, um die Verbindung von Sperrelement 6 und Kopfelement 3 zu unterstützen. Das Sperrelement 6 weist dabei einen Führungsabschnitt 9 auf, welcher wenigstens abschnittsweise entlang der axialen Richtung A ausgebildet ist, wenigstens abschnittsweise senkrecht zur axialen Richtung A ausgebildet ist und wenigstens abschnittsweise entlang des Umfangs des Ansaugstutzens 1 verläuft.

Der Führungsabschnitt 9 ist dabei als Labyrinth ausgebildet, durch eine Anordnung von vier einander in axialer Richtung A nachfolgenden Ebenen 15. Dabei sind die Flächen der Ebenen 15 parallel zueinander ausgerichtet und die Ebenen 15 sind als ringförmige Erweiterungen um einen zentralen, zylindrischen Achsstamm 17 angeordnet. Die erste Ebene 15 weist dabei seitliche Randerweiterungen 18 auf, durch welche der Führungsabschnitt 9 monolithisch mit dem vorgeordneten Bereich des Sperrelements 6 verbunden ist. Die Ebenen 15 weisen dabei einen Abstand voneinander auf, wodurch zwischen den Ebenen 15, entlang des Umfangs randseitige Kanäle ausgebildet werden. Die Ebenen 15 weisen dabei außerdem kanalartige Durchführungen auf, als Einformungen am äußeren Rand der Ebenen 15 und durch seitliche Abschneidungen ihres ansonsten runden Außenumfangs. Hierdurch entsteht jeweils ein seitlicher Spalt und/oder Kanal an den Rändern der Ebenen 15, durch welchen die Luft entlang der axialen Richtung A zur jeweils nachgeordneten Ebene 15 fließen kann. Dabei sind die Durchführungen einer Ebene 15 jeweils in doppelter Ausführung spiegelsymmetrisch auf gegenüberliegenden Seiten des Sperrelements 6 ausgebildet, wobei nicht alle Ebenen 15 dieselbe Symmetrieebene aufweisen.

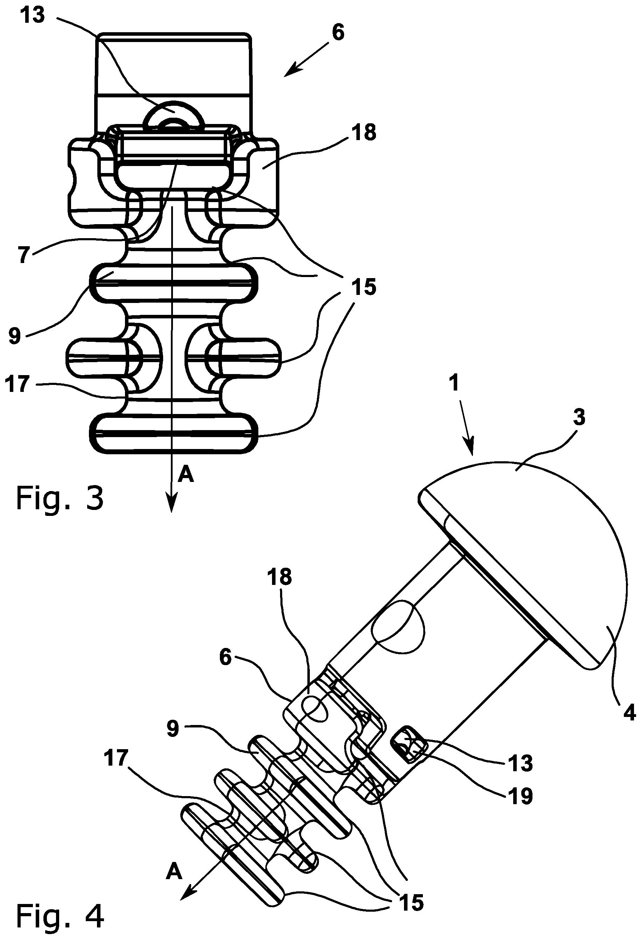

Die Fig. 3 zeigt ein erfindungsgemäßes Sperrelement 6 in einer Seitenansicht. Das Sperrelement 6 weist dabei Ausformungen 13 auf, welche im hier nicht gezeigten Kopfelement 3 in komplementär geformte Aussparungen 19 angeordnet werden können, um die Verbindung von Sperrelement 6 und Kopfelement 3 zu unterstützen. Weiterhin ist am Sperrelement 9 eine Ausführöffnung 7 ausgebildet, durch welche die geführte Luft aus dem Ansaugstutzen 1 austreten kann und nachfolgend durch den Führungsabschnitt 9 geführt wird.

Der Führungsabschnitt 9 ist dabei als Labyrinth ausgebildet, durch eine Anordnung von vier einander in axialer Richtung A nachfolgenden Ebenen 15. Dabei sind die Flächen der Ebenen 15 parallel zueinander ausgerichtet und die Ebenen 15 sind als ringförmige Erweiterungen um einen zentralen, zylindrischen Achsstamm 17 angeordnet. Die erste Ebene 15 weist dabei seitliche Randerweiterungen 18 auf, durch welche der Führungsabschnitt 9 monolithisch mit dem vorgeordneten Bereich des Sperrelements 6 verbunden ist. Die Ebenen 15 weisen dabei einen Abstand voneinander auf, wodurch zwischen den Ebenen 15, entlang des Umfangs randseitige Kanäle ausgebildet werden. Die Ebenen 15 weisen dabei außerdem kanalartige Durchführungen auf, als Einformungen am äußeren Rand der Ebenen 15 und durch seitliche Abschneidungen ihres ansonsten runden Außenumfangs. Hierdurch entsteht jeweils ein seitlicher Spalt und/oder Kanal an den Rändern der Ebenen 15, durch welchen die Luft entlang der axialen Richtung A zur jeweils nachgeordneten Ebene 15 fließen kann. Dabei sind die Durchführungen einer Ebene 15 jeweils in doppelter Ausführung spiegelsymmetrisch auf gegenüberliegenden Seiten des Sperrelements 6 ausgebildet, wobei nicht alle Ebenen 15 dieselbe Symmetrieebene aufweisen.

Die Fig. 4 zeigt eine perspektivische Ansicht des erfindungsgemäßen Ansaugstutzens 1, umfassend ein Kopfelement 3 mit einem Befestigungsabschnitt 4 und ein Sperrelement 6 mit einem Führungsabschnitt 9. Der Befestigungsabschnitt 4 ist bevorzugt kuppelartig ausgebildet, insbesondere pilzförmig, wobei auch andere Ausführungen, zum Beispiel mit einer Grifflasche oder einem Griffring denkbar sind. Das Kopfelement 3 und das Sperrelement 6 sind bevorzugt trennbar voneinander ausgebildet, wobei das Sperrelement 6 an einem Verbindungsabschnitt entgegen der axialen Richtung A in einen Verbindungsabschnitt des Kopfelements zur Ausbildung einer Verbindungsstelle 16 einsteckbar und/oder lösbar ist. Dabei sind vorteilhaft der Innendurchmesser des Kopfelements 3 und der Außendurchmesser des Sperrelements 6 derart aufeinander abgestimmt, dass die Verbindung stabil und dicht ist. Das Sperrelement 6 weist dabei bevorzugt Ausformungen 13 auf, welche in am Kopfelement 3 komplementär geformte Aussparungen 19 eingreifen können.

Der Führungsabschnitt 9 ist als Labyrinth ausgebildet, durch eine Anordnung von vier einander in axialer Richtung A nachfolgenden Ebenen 15. Dabei sind die Flächen der Ebenen 15 parallel zueinander ausgerichtet und die Ebenen 15 sind als ringförmige Erweiterungen um einen zentralen, zylindrischen Achsstamm 17 angeordnet. Die erste Ebene 15 weist dabei seitliche Randerweiterungen 18 auf, durch welche der Führungsabschnitt 9 monolithisch mit dem vorgeordneten Bereich des Sperrelements 6 verbunden ist. Die Ebenen 15 weisen dabei einen Abstand voneinander auf, wodurch zwischen den Ebenen 15, entlang des Umfangs randseitige Kanäle ausgebildet werden. Die Ebenen 15 weisen dabei außerdem kanalartige Durchführungen auf, als Einformungen am äußeren Rand der Ebenen 15 und durch seitliche Abschneidungen ihres ansonsten runden Außenumfangs. Hierdurch entsteht jeweils ein seitlicher Spalt und/oder Kanal an den Rändern der Ebenen 15, durch welchen die Luft entlang der axialen Richtung A zur jeweils nachgeordneten Ebene 15 fließen kann. Dabei sind die Durchführungen einer Ebene 15 jeweils in doppelter Ausführung spiegelsymmetrisch auf gegenüberliegenden Seiten des Sperrelements 6 ausgebildet, wobei nicht alle Ebenen 15 dieselbe Symmetrieebene aufweisen.

### Bezugszeichen

- 1: Ansaugstutzen
- 2: Saugvorrichtung
- 3: Kopfelement
- 4: Befestigungsabschnitt
- 5: Eintrittsöffnung
- 6: Sperrelement
- 7: Ausführöffnung
- 8: Fluidkanal
- 9: Führungsabschnitt
- 10: Blende
- 11: erstes Dichtungselement
- 12: zweites Dichtungselement
- 13: Ausformung
- 14: Rohrabschnitt
- 15: Ebene
- 16: Verbindungsstelle
- 17: Achsstamm
- 18: Randerweiterung
- 19: Aussparung

- A: Axiale Richtung des Ansaugstutzens

## Patentansprüche

1. Ansaugstutzen,
zur Verwendung an einer Saugvorrichtung (2) in einer Getränkezubereitungsvorrichtung, insbesondere eine Kaffee- oder Espressomaschine mit einem Milchmodul,
wobei der Ansaugstutzen (1) ein Kopfelement (3) umfasst, welches wenigstens einen, bevorzugt an einem von der Saugvorrichtung (2) abgewandten Ende ausgebildeten, Befestigungsabschnitt (4) zur Befestigung des Ansaugstutzens (1) an der Saugvorrichtung (2) umfasst und eine Eintrittsöffnung (5) aufweist, durch welche Luft in den Ansaugstutzen (1) entlang einer axialen Richtung (A) eintreten, bevorzugt eingesaugt werden, kann,
und wobei der Ansaugstutzen (1) ein mit dem Kopfelement (3) fluidleitend verbundenes Sperrelement (6) umfasst, welches derart ausgebildet ist, dass ein Eintreten von Flüssigkeit, bevorzugt von Spritzern einer aufzuschäumenden und/oder zu erwärmenden Flüssigkeit, besonders bevorzugt von Milchspritzern, in den Ansaugstutzen (1) entgegen der axial verlaufenden Richtung (A) verhindert wird, und wobei am Sperrelement (6) eine Ausführöffnung (7) ausgebildet ist, durch welche Luft aus dem Ansaugstutzen (1) austreten kann,
wobei zwischen der Eintrittsöffnung (5) und der Ausführöffnung (7) ein, bevorzugt entlang der axialen Richtung (A) verlaufender, Fluidkanal (8) zur Führung der Luft durch den Ansaugstutzen (1) angeordnet ist,
**dadurch gekennzeichnet,**
**dass** am Sperrelement (6) ein der Ausführöffnung (7) nachgeordneter Führungsabschnitt (9) ausgebildet ist, durch welchen die Luft nach dem Austreten aus der Ausführöffnung (7) in einem Rohrabschnitt (14) der Saugvorrichtung (2) geführt wird.

2. Ansaugstutzen nach Anspruch 1,
**dadurch gekennzeichnet,**
**dass** der Führungsabschnitt (9) wenigstens teilweise entlang der axialen Richtung (A) des Ansaugstutzens (1) verlaufend ausgebildet ist.

3. Ansaugstutzen nach Anspruch 1 oder 2,
**dadurch gekennzeichnet,**
**dass** der Führungsabschnitt (9) wenigstens teilweise senkrecht zur axialen Richtung (A) des Ansaugstutzens (1) verlaufend angeordnet ist.

4. Ansaugstutzen nach einem der Ansprüche 1 bis 3,
**dadurch gekennzeichnet,**
**dass** der Führungsabschnitt (9) wenigstens teilweise entlang des Umfangs des Ansaugstutzens (1) verlaufend angeordnet ist.

5. Ansaugstutzen nach einem der Ansprüche 1 bis 4,
**dadurch gekennzeichnet,**
**dass** der Führungsabschnitt (9) wenigstens eine, bevorzugt eine Vielzahl von, Verzweigung/en aufweist.

6. Ansaugstutzen nach einem der Ansprüche 1 bis 5,
**dadurch gekennzeichnet,**
**dass** der Führungsabschnitt (9) wenigstens teilweise am Außenumfang des Sperrelements (6) ausgebildet ist, insbesondere als randseitig verlaufende Kanäle.

7. Ansaugstutzen nach einem der Ansprüche 1 bis 6,
**dadurch gekennzeichnet,**
**dass** das Kopfelement (3) und das Sperrelement (6), bevorzugt vollständig, voneinander trennbar ausgebildet sind.

8. Ansaugstutzen nach Anspruch 7,
**dadurch gekennzeichnet,**
**dass** das Sperrelement (6) an seinem dem Kopfelement (3) zugewandten Ende und das Kopfelement (3) an seinem dem Sperrelement (6) zugewandten Ende jeweils einen Verbindungsabschnitt umfassen, wobei der Außenumfang des Verbindungsabschnitts des Sperrelements (6) und der Innenumfang des Verbindungsabschnitts des Kopfelements (3) derart ausgebildet sind, dass das Sperrelement (6), bevorzugt entgegen der axialen Richtung (A), mit dem Kopfelement (3) verbunden werden kann, insbesondere in das Kopfelement (3) eingesteckt und/oder eingeschoben werden kann.

9. Ansaugstutzen nach einem der Ansprüche 1 bis 8,
**dadurch gekennzeichnet,**
**dass** am Ansaugstutzen (1), bevorzugt im Bereich der Verbindungsstelle des Kopfelements (3) mit dem Sperrelement (6), ein Bündelelement, insbesondere eine Blende (10), angeordnet ist, welche einen geringeren Innendurchmesser als der Innendurchmesser des Kopfelements (3) und/oder des Sperrelements (6) aufweist.

10. Ansaugstutzen nach einem der Ansprüche 1 bis 9,
**dadurch gekennzeichnet,**
**dass** ein erstes Dichtungselement (11), insbesondere ein in Umfangsrichtung vollständig geschlossener Dichtungsring, im Bereich der Verbindungsstelle des Kopfelements (3) mit dem Sperrelement (6) angeordnet ist.

11. Ansaugstutzen nach einem der Ansprüche 1 bis 10,
**dadurch gekennzeichnet,**
**dass** wenigstens ein zweites, bevorzugt in Umfangsrichtung vollständig geschlossenes, Dichtungselement (12) am Außenumfang des Kopfelements (3) angeordnet ist.

12. Ansaugstutzen nach einem der Ansprüche 1 bis 11,
**dadurch gekennzeichnet,**
**dass** der Befestigungsabschnitt (4) des Kopfelements (3) kuppelartig, insbesondere pilzförmig, ausgebildet ist.

13. Ansaugstutzen nach einem der Ansprüche 1 bis 12,
**dadurch gekennzeichnet,**
**dass** am Außenumfang des Sperrelements (6) wenigstens zwei Ausformungen (13), insbesondere Zapfen, ausgebildet sind und am Innenumfang des Kopfelements (3) wenigstens zwei zu den Ausformungen (13) komplementär geformte Aussparungen (19) ausgebildet sind.

14. Getränkezubereitungsvorrichtung mit einer Saugvorrichtung (2), bevorzugt eine Kaffee- und/oder Espressomaschine mit einem Schaummodul,
**gekennzeichnet durch** einen Ansaugstutzen (1) nach einem der Ansprüche 1 bis 13.
